# EUROPÄISCHE PATENTSCHRIFT

(11) **EP 3 112 065 B1**
(45) Veröffentlichungstag und Bekanntmachung des Hinweises auf die Patenterteilung: **15.11.2017**
(21) Anmeldenummer: 16172572.6
(22) Anmeldetag: 02.06.2016
(51) Int. Cl.: B23B 31/11, B23C 5/26, B23B 31/40

(54) **MASCHINELL BETRIEBENE VORRICHTUNG, INSBESONDERE FRÄSVORRICHTUNG**
MECHANICALLY OPERATED DEVICE, IN PARTICULAR MILLING DEVICE
DISPOSITIF MECANIQUE, EN PARTICULIER DISPOSITIF DE FRAISAGE

(30) Priorität: 29.06.2015 DE 102015110405
(43) Veröffentlichungstag der Anmeldung: 04.01.2017
(73) Patentinhaber: Putsch GmbH & Co. KG, 58095 Hagen (DE)
(72) Erfinder:
(74) Vertreter: Köchling, Conrad-Joachim

(56) Entgegenhaltungen:
- DE-B- 1 263 454
- GB-A- 900 065
- US-A- 2 824 744

## Beschreibung

Die Erfindung betrifft eine maschinell betriebene Vorrichtung gemäß dem Oberbegriff des Patentanspruchs 1, insbesondere Fräsvorrichtung mit einer in einem Gehäuse drehbar gelagerten Antriebswelle, deren erstes aus dem Gehäuse abragendes Ende Mittel zur Ankopplung eines Drehantriebes aufweist und deren zweites aus dem Gehäuse vorragendes Ende ein scheibenartiges Werkzeug, insbesondere Fräswerkzeug, trägt, welches mit einer axialen Lochung auf einen wellenseitig gehaltenen Scheibenblock mit Ringspannelementen aufgesteckt ist, an einem wellenfesten Gegenlager anliegt und dessen Scheibenblock mittels eines Spannmittels kraftschlüssig gegen die Lochlaibung der Lochung des Werkzeuges anspannbar ist.

Eine derartige Vorrichtung geht beispielsweise aus der US 2 824 744 A hervor.

Bei einer solchen Vorrichtung ist am ersten Ende der im Gehäuse drehbar gelagerten Antriebswelle, beispielsweise ein Zahnriemenrad fixiert, welches die Ankopplung eines Drehantriebes ermöglicht. Die Vorrichtung kann mit dem Gehäuse als Bestandteil einer Maschine oder Anlage angeordnet sein.

An dem zweiten Ende der Antriebswelle, die aus dem Gehäuse vorragt, ist ein scheibenartiges Werkzeug, beispielsweise ein Fräswerkzeug fixiert. Dieses weist zentrisch eine Lochung auf. Mit dieser Lochung kann das Werkzeug auf einen Scheibenblock mit Ringspanelementen aufgesteckt werden, der auf dem Wellenende angeordnet ist. Die Welle trägt ferner ein Gegenlager, gegen das das scheibenartige Werkzeug angedrückt werden kann. Zum Fixieren des Werkzeuges kann der Scheibenblock mit den Ringspannelementen durch ein Spannmittel aufgespannt werden, welches beispielsweise durch einen Spannkopf und eine Spannschraube gebildet ist. Der Spannkopf stützt sich an der Seitenfläche des Werkzeuges und/oder des Scheibenblockes ab. Mittels der Schraube wird eine Fixierung und Verspannung am Ende der Antriebswelle erreicht. Sofern das entsprechende Werkzeug verschlissen ist oder aus anderem Grund gewechselt werden muss, so ist es erforderlich, das Spannmittel zu lösen und zu entfernen, um das Werkzeug von dem Scheibenblock mit den Ringspannelementen abnehmen zu können und durch ein anderes Werkzeug zu ersetzen. Diese Vorgehensweise ist aufwendig und bedarf eines Werkzeuges, wobei häufig die zur Verfügung stehenden Räumlichkeiten die Handhabung und Anordnung eines Werkzeuges erschwert, da diese Räumlichkeiten durch andere Bestandteile der Vorrichtung oder der entsprechenden Maschine verdeckt sind.

Der Scheibenblock mit den Ringspannelementen ist ein bekanntes Spannelement, bei dem durch die Einleitung einer axialen Kraft durch das Spannmittel erreicht wird, dass der Scheibenblock sich mit den Ringspannelementen radial ausdehnt und gegen die Aufnahmebohrung des Werkzeuges angespannt wird. Somit erfolgt die Drehmomentübertragung kraftschlüssig über die Antriebswelle und den Scheibenblock auf das Werkzeug.

Ausgehend von diesem Stand der Technik liegt der Erfindung die Aufgabe zugrunde, eine Vorrichtung gattungsgemäßer Art zu schaffen, bei der mit geringem Aufwand stets eine gleiche Spannkraft für das Werkzeug einstellbar ist, die einen geringen Montageplatz zum Wechsel des Werkzeuges benötigt und bei der ein werkzeugloser Austausch des Werkzeuges in einfacher Art und Weise ermöglicht ist.

Zur Lösung dieser Aufgabe schlägt die Erfindung vor, dass die Antriebswelle einen zum zweiten Ende offen ausmündenden, über einen Teil ihrer axialen Erstreckung verlaufenden Kanal aufweist, in den ein Druckstück axial verschiebbar eingesetzt ist, das an seinem zum zweiten Ende der Antriebswelle weisenden ersten Endbereich mit dem Spannmittel gekoppelt ist und an seinem zweiten Endbereich mit einem die Antriebswelle quer in einem axial gerichteten Langloch derselben durchgreifenden Bolzen gekoppelt ist, der radial über die Antriebswelle in einen Freiraum des Gehäuses vorragt, wobei zwischen den vorragenden Bereichen des Bolzens und einem nahe des zweiten Endes der Antriebswelle zwischen Antriebswelle und Gehäuse angeordneten Lager ein Federpaket mit axial wirkender Federkraft angeordnet oder eingespannt ist und zwischen den vorragenden Bereichen des Bolzens und einem nahe des ersten Endes der Antriebswelle zwischen Antriebswelle und Gehäuse angeordneten Lager ein axial verschieblicher Kolben angeordnet ist, der mittels Druckbeaufschlagung über einen gehäuseseitigen Druckmittelanschluss in Richtung zum zweiten Ende der Antriebswelle entgegen der Federkraft des Federpaketes verstellbar ist.

Gemäß dieser Anordnung wird zunächst bei der Erstmontage des entsprechenden Werkzeuges in an sich bekannter Weise vorgegangen, in dem das Werkzeug auf den Scheibenblock mit Ringspannelementen aufgesteckt wird und durch das Spannmittel eine kraftschlüssige Verbindung zwischen Lochlaibung und Scheibenblock realisiert wird. Diese kraftschlüssige Verbindung wird nur bei der Erstmontage eines Werkzeuges durchgeführt. Bei einem späteren Wechsel des Werkzeuges wird die einmal eingestellte Spannkraft auch bei gewechseltem Werkzeug wiederum erreicht.

Bei der Notwendigkeit des Ersatzes des Werkzeuges durch ein anderes, wird der in dem Gehäuse befindliche Kolben mit Druckmittel, beispielsweise hydraulisch, beaufschlagt, sodass der Kolben in Richtung auf das zweite Ende der Antriebswelle entgegen der Federkraft des Federpaketes verstellt wird. Hierdurch erfolgt eine Krafteinleitung vom Kolben auf den gegenüber der Antriebswelle begrenzt verschiebliche Bolzen und das Druckstück, wodurch eine Verschiebung des Spannmittels relativ zur Antriebswelle erfolgt und eine Entspannung des Scheibenblocks mit den Ringspannelementen erreicht wird. In dieser Position kann das Werkzeug entnommen werden, in dem es mit seiner Lochung axial von der Antriebswelle abgezogen wird. Die Lochung des Werkzeuges ist so bemessen, dass es von den Spannmitteln ohne Behinderung durch die Spannmittel abgenommen werden kann. Anschließend kann ein neues Werkzeug aufgeschoben werden. Die Werkzeugentnahme und das Werkaufbringen erfolgt manuell. Anschließend kann über eine Steuerung über den Druckmittelanschluss eine Druckentlastung erfolgen, wodurch sich das Federpaket wiederum bis auf die eingestellte Vorspannung entspannt. Hierdurch verschieben sich die Bestandteile Kolben, Bolzen, Druckstück und Spannmittel wieder in die Spannposition (selbständig), sodass das Werkzeug wieder gespannt ist und für weitere maschinelle Betriebsweise zur Verfügung steht.

Durch diese Ausgestaltung wird erreicht, dass das Werkzeug stets mit gleicher Spannkraft gespannt ist. Darüber hinaus bedarf es zur Auswechslung des Werkzeuges nur eines geringen Montageplatzes, da das Werkzeug lediglich axial von der Welle abgezogen beziehungsweise auf die Welle aufgeschoben werden muss. Ein zusätzlicher Platzbedarf für Werkzeuge oder dergleichen besteht nicht. Die Montage und Demontage erfolgt werkzeuglos. Hierdurch wird die Betriebssicherheit der Vorrichtung verbessert und die Zeit für den Werkzeugwechsel verkürzt.

Besonders bevorzugt ist vorgesehen, dass das Spannmittel aus einer Spannhülse mit Spannkopf und einer Kopfschraube besteht, wobei die Spannhülse in den Kanal der Antriebswelle eingreift und deren Spannkopf sich mittelbar unter Zwischenanordnung eines Spannstückes oder unmittelbar an der dem wellenfesten Gegenlager abwandten Stirnfläche des Scheibenblockes mit Ringspannelementen abstützt, wobei die Kopfschraube sich mit ihrem Kopf am Spannkopf abstützt und mit ihrem Gewindeschaft in das Druckstück eingeschraubt ist, wobei zwischen Druckstück und Spannhülse ein Abstandsspalt besteht und wobei die Bemessung des Spannkopfes, des Spannstückes und des Kopfes der Kopfschraube in Querrichtung zur axialen Erstreckung der Antriebswelle so gewählt ist, dass das Werkzeug mit seiner Lochung über diese aufschiebbar ist.

Durch diese Anordnung ist einerseits bei der Erstinstallation in einfacher Weise eine Einstellung der Spannkraft durch Betätigung des Spannmittels ermöglicht, wobei andererseits bei bestimmungsgemäßer Benutzung durch entsprechende Druckbeaufschlagung des Kolbens eine einfache Entnahme des Werkzeuges und eine Neumontage eines Ersatzwerkzeuges ermöglicht ist.

Um eine einfache Verbindung zwischen Druckstück und Bolzen zu erreichen ist vorgesehen, dass das Druckstück an seinem zweiten Endbereich ein Gewindestück aufweist, das in eine Gewindebohrung des Bolzens eingeschraubt ist.

Um mögliche Toleranzen bei der Montage ausgleichen zu können, ist zudem vorgesehen, dass das Druckstück an seinem zweiten Endbereich eine ballige Stützfläche aufweist, die an einer balligen Fläche des Bolzens oder eines zwischen Bolzen und Stützfläche angeordneten Stützringes anliegt.

Diese Anordnung ermöglicht eine zwängungsfreie Fixierung der Teile aneinander.

Zudem ist bevorzugt vorgesehen, dass das Federpaket aus mehreren Tellerfedern besteht.

Um die Anordnung und Montage des Federpaktes zu erleichtern, ist vorgesehen, dass das Federpaket in einer im Gehäuse angeordneten Aufnahmebuchse angeordnet ist.

Um eine leichtgängige und störungsfreie Betriebsweise der Vorrichtung sicherzustellen ist vorgesehen, dass zwischen dem Federpaket oder dessen Bestandteilen und den vorragenden Bereichen des Bolzens ein Axiallager angeordnet ist.

Aus dem gleichen Grunde ist vorgesehen, dass zwischen den vorragenden Bereichen des Bolzens und dem Kolben ein Axiallager angeordnet ist.

Zudem ist bevorzugt vorgesehen, dass der Kolben abgedichtet im Gehäuse angeordnet ist und gegebenenfalls auch gegenüber der Antriebswelle abgedichtet, wobei die Stirnfläche des Kolbens, die dem ersten Ende der Antriebswelle benachbart ist, mit dem Druckmittelanschluss in Verbindung ist.

Eine solche Ausgestaltung ist insbesondere dann zur Vermeidung von Leckagen hilfreich, wenn als Druckmittel Hydraulikflüssigkeit eingesetzt wird.

Um ein unerwünschtes Mitdrehen des Kolbens und/oder des Federpaketes im Gehäuse zu unterbinden, ist vorgesehen, dass der Kolben und/oder das Federpaket oder eine Aufnahmebuchse des Federpaketes im Gehäuse begrenzt axial beweglich und unverdrehbar um die Mittellängsachse der Antriebswelle gehalten sind.

Um die Gefahr des Lösens der Gewindeverbindungen bei Betätigung des Werkzeuges zu vermeiden, ist vorgesehen, dass die Gewindeverbindung zwischen Kopfschraube und Druckstück gegen Lösen gesichert ist.

Durch diese Anordnung wird ein Lösen der Gewindeverbindungen beim Betrieb der Vorrichtung vermieden, sodass ein Vorspannungsverlust bezüglich der Vorspannung des Werkzeuges auszuschließen ist. Zudem ist bevorzugt vorgesehen, dass bei linksdrehender Antriebswelle die Gewindeverbindungen zwischen Kopfschraube und Druckstück und Bolzen mit Rechtsgewinde ausgebildet sind und bei rechtsdrehender Antriebswelle analog mit Linksgewinde.

Ein Ausführungsbeispiel der Erfindung ist der Zeichnung dargestellt und im Folgenden näher beschrieben.

Es zeigt:

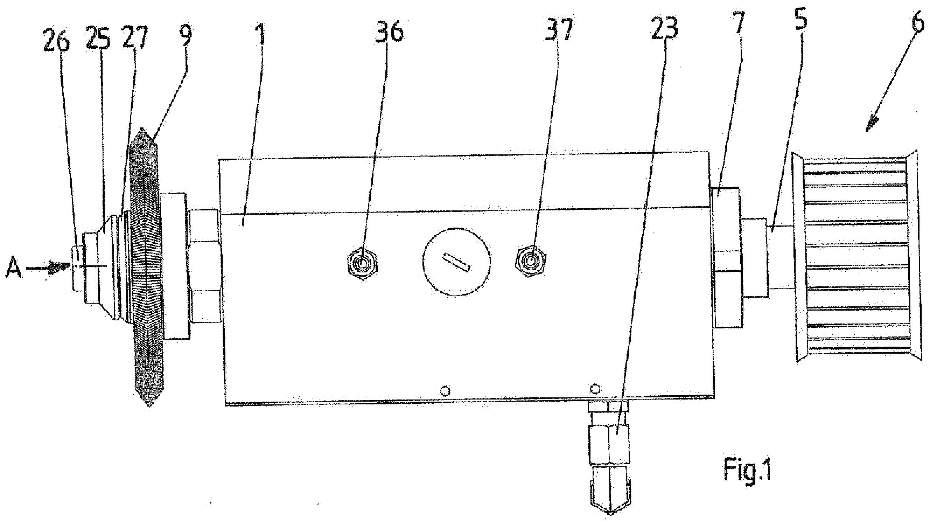

- Figur 1: eine erfindungsgemäße Vorrichtung in Seitenansicht;

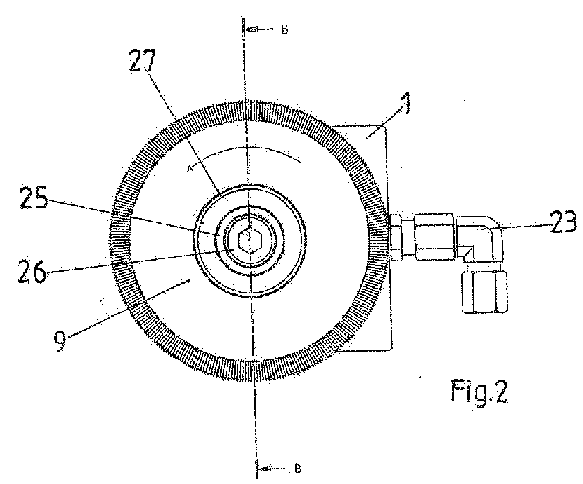

- Figur 2: desgleichen in Stirnansicht in Richtung des Pfeiles A der Figur 1 gesehen;
- Figur 3: die Vorrichtung im Schnitt B-B der Figur 2 gesehen.

Beim Erfindungsgegenstand handelt es sich um eine maschinell betriebene Vorrichtung, insbesondere Fräsvorrichtung, für eine Messerschärfmaschine für Schnitzelmesser für Rübenbearbeitung.

Die Vorrichtung weist eine in einem Gehäuse 1 drehbar gelagerte Antriebswelle 2 auf. Zum Zwecke der Lagerung der Antriebswelle 2 sind an den Enden des Gehäuses 1, Lager 3,4, insbesondere Rillenkugellager angeordnet. Das erste aus dem Gehäuse abragende Ende 5 der Antriebswelle 2 weist ein Mittel 6 zur Ankopplung eines Drehantriebes auf. Im Ausführungsbeispiel ist das Mittel 6 beispielsweise ein Zahnriemenrad, welches in Verbindung mit einem Zahnriemen und einem Antriebsmotor die Einleitung eines Drehmomentes ermöglicht. Zur Lagesicherung ist auf dem Ende 5 ein Nutring 7 angeordnet.

Das zweite Ende 8 der Antriebswelle 2 ragt ebenfalls aus dem Gehäuse 1 vor und ist mittels Lager 4 gelagert. Dieses zweite Ende 8 trägt ein scheibenartiges Werkzeug 9, beispielsweise ein Fräswerkzeug. Dieses ist mit einer axialen Lochung 10 auf einen wellenseitig gehaltenen Scheibenblock 11 mit Ringspannelementen aufgesteckt. In der Montagesollposition liegt das Werkzeug 9 an einem wellenfesten Gegenlager 12 an. Der Scheibenblock 11 ist mittels eines Spannmittels 13 kraftschlüssig gegen die Lochlaibung der Lochung 10 des Werkzeuges 9 anspannbar.

Die Antriebswelle 2 weist einen zum zweiten Ende 8 hin offen ausmündenden über einen Teil ihrer axialen Erstreckung verlaufenden Kanal 14 auf, in dem ein Druckstück 15 axial verschiebbar eingesetzt ist. Dieses Druckstück 15 ist an seinem zum zweiten Ende 8 der Antriebswelle 2 hinweisenden ersten Endbereich 16 mit einem Bestandteil des Spannmittels 13 gekoppelt. An seinem zweiten Endbereich 17 ist das Druckstück 15 mit einem die Antriebswelle 2 quer in einem axial gerichteten Langloch 18 durchgreifenden Bolzen 19 gekoppelt, der radial über die Antriebswelle 2 in einen Freiraum 20 zwischen Welle 2 und Gehäuse 1 vorragt.

Zwischen den vorragenden Bereichen des Bolzens 19 und dem nahe des zweiten Endes 8 der Antriebswelle 2 zwischen der Welle und dem Gehäuse 1 angeordneten Lager 4 ist ein Federpaket 21 angeordnet, welches in axialer Richtung Federkraft aufbaut, beziehungsweise leistet. In der Einbausolllage ist dieses Federpaket vorgespannt. Ferner ist zwischen den vorragenden Bereichen des Bolzens 19 und einem nahe des ersten Endes 5 der Antriebswelle 2 zwischen Welle und Gehäuse 1 angeordneten Lager 3 ein axial verschieblicher Kolben 22 angeordnet, der mittels Druckbeaufschlagung über einen Druckluftanschluss 23 in Richtung zum zweiten Ende 8 der Antriebswelle 2 entgegen der Federkraft des Federpaketes 21 verstellbar ist.

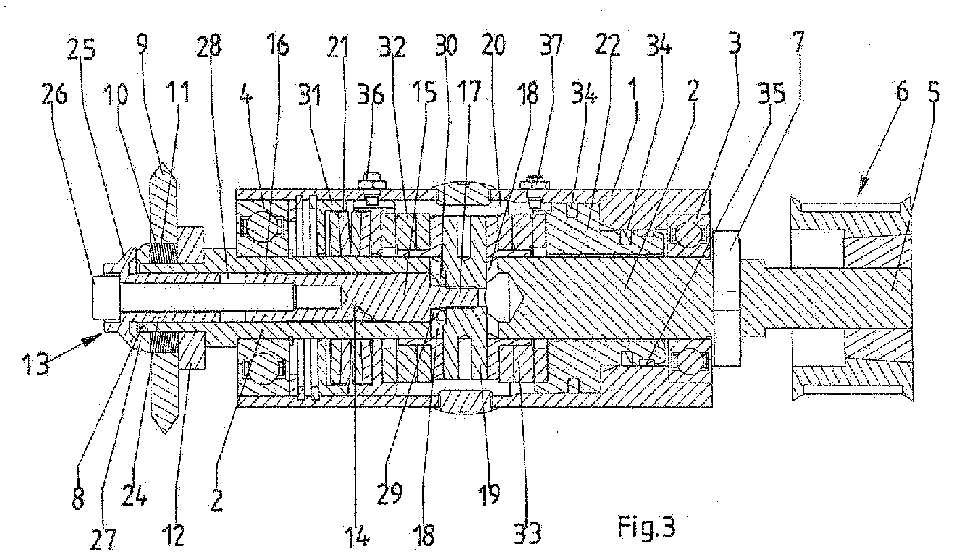

In der Zeichnung ist die Normalstellung des Kolbens 22 gezeigt. Sofern der Kolben mit Druckmittel beaufschlagt wird, verschiebt er sich in der Darstellung gemäß Figur 3 nach links und nimmt die dazwischen befindlichen Bestandteile mit, wobei das Federpaket 21 zunehmend gespannt wird. Durch die so erzeugte Bewegung der Teile 13,15,17,19 erfolgt eine Entlastung des Scheibenblockes 11 mit den Ringspannelementen, sodass die kraftschlüssige Verbindung zwischen diesem und der Lochlaibung des Werkzeuges 9 aufgehoben ist. Das Werkzeug 9 kann demzufolge in der Zeichnung nach links manuell abgenommen werden und durch ein neues Werkzeug ersetzt werden. Sofern das Werkzeug sich dann in der Solllage gemäß Figur 3 befindet, kann der Kolben 22 in die Ausgangsstellung gemäß Figur 3 zurückgestellt werden, wenn eine Druckentlastung durch das Druckmittel stattfindet, wobei die Rückstellung durch die Kraft des Federpaketes 21 bewirkt wird.

In dieser Position ist wiederum die gleiche Spannkraft für das Werkzeug 9 eingestellt. Zum Auswechseln bedarf es nur einer kurzen Zeit und eines geringen Montageplatzes, wobei zudem die Auswechslung des Werkzeuges 9 werkzeuglos erfolgen kann.

Das Spannmittel 13 besteht im Wesentlichen aus einer Spannhülse 24 mit daran befindlichem Spannkopf 25 sowie einer Kopfschraube 26. Die Spannhülse 24 greift in den Kanal 14 der Antriebswelle 2 ein, wobei deren Spannkopf 25 sich mittelbar unter Zwischenanordnung eines Spannstückes 27 an der dem wellenfesten Gegenlager 12 abgewandten Stirnfläche des Scheibenblockes 11 mit den Ringspannelementen abstützt. Die Kopfschraube 26 stützt sich mit ihrem Kopf am Spannkopf 25 ab und ist mit ihrem Gewindeschaft in das Druckstück 15 eingeschraubt. Zwischen dem Druckstück 15 und der Spannhülse 24 besteht ein Abstandsspalt 28. Hierdurch wird der notwendige Weg bei Betätigung des Spannmittels 13 zur Verfügung gestellt. Die Bemessung des Spannkopfes 25, des Spannstückes 27 und des Kopfes der Spannschraube 26 in Querrichtung zur axialen Erstreckung der Antriebswelle 2 ist so gewählt, dass das Werkzeug 9 mit seiner Lochung 10 über diese Bestandteile axial aufschiebbar ist.

Um in einfacher Weise eine Verbindung des Druckstückes 15 mit dem Bolzen 19 zu ermöglichen, weist das Druckstück 15 an seinem zweiten Ende 17 ein Gewindestück auf, das in eine passende Gewindebohrung des Bolzens 19 eingeschraubt ist. Um Zwängungen beim Zusammenfügen der Teile zu vermeiden, ist ferner das Druckstück 15 an seinem zweiten Endbereich 17 und zwar in dem Bereich 29 mit einer balligen Stützfläche versehen, die an einer ebenfalls balligen Stützfläche des Bolzens 19 oder eines zwischen Bolzen 19 und Stützfläche angeordneten Stützringes 30 anliegt.

Vorzugsweise besteht das Federpaket 21 aus mehreren Tellerfedern, wobei das Federpaket 21 in einer im Gehäuse angeordneten Aufnahmebuchse 31 angeordnet ist. Die Aufnahmebuchse 31 liegt einerseits am Gehäuse 1 innenwandig an und hat einen Durchgriff für die Antriebswelle 2, die die Aufnahmebuchse 31 mit Spiel durchgreift. Zusätzlich ist zwischen dem Federpaket 21 oder dessen Bestandteilen, beziehungsweise Bestandteilen der Aufnahmebuchse 31 und dem vorragenden Bereich des Bolzens 19 ein Axiallager 32 angeordnet. Ebenso ist zwischen dem vorragenden Bereich des Bolzens 19 und dem Kolben 22 ein entsprechendes Axiallager 33 angeordnet.

Der Kolben 22 ist abgedichtet im Gehäuse 1 angeordnet und gegebenenfalls auch gegenüber der Antriebswelle 2 abgedichtet, wobei die in der Zeichnung rechts befindliche Stirnfläche des Kolbens 22, die dem ersten Ende 5 der Antriebswelle benachbart ist, mit dem Druckmittelanschluss 23 in offener Verbindung ist, sodass Druck auf die Stirnfläche zugeführt werden kann. Entsprechende Dichtungsmittel sind beispielsweise bei 34 angegeben. Bei 35 ist ein Führungselement für den Kolben 22 gezeigt.

Der Kolben 22 und auch das Federpaket 21 beziehungsweise dessen Aufnahmebuchse 31 ist im Gehäuse 1 begrenzt axial beweglich und unverdrehbar um die Mittellängsachse der Antriebswelle 2 gehalten. Hierzu sind entsprechende Bolzen 36,37 am Gehäuse 1 befestigt, die mit ihren in das Gehäuse vorragenden Enden in eine Längsschlitzausbildung von Kolben 22 beziehungsweise Aufnahmebuchse 31 eingreifen.

Zusätzlich ist die Gewindeverbindung zwischen der Kopfschraube 26 und dem Druckstück 15 gegen Lösen gesichert, beispielsweise mittels eines Klebers.

Die Anordnung ist derart vorgenommen, dass bei linksdrehender Antriebswelle 2 die Gewindeverbindungen zwischen Kopfschraube 26 und Druckstück 15 sowie zwischen diesem und dem Bolzen 19 mit Rechtsgewinde ausgebildet sind. Bei rechtsdrehender Antriebswelle sind die entsprechenden Gewindeausbildungen analog als Linksgewinde vorgesehen. Hierdurch wird ein Losdrehen beim Betrieb der Antriebswelle 2 vermieden.

Durch die erfindungsgemäße Ausgestaltung, die in den Zeichnungen gezeigt ist, wird eine sehr einfache Montage beim geringem Raumbedarf ermöglicht, wobei jeweils die gleiche Spannkraft für das Werkzeug 9 eingestellt ist und die Montage sowie Demontage werkzeuglos erfolgen kann.

Bei der Erstmontage wird das Werkzeug 9 über den Scheibenblock 11 durch Einleitung von axialen Kräften auf den Scheibenblock gespannt. Durch die Einleitung einer axialen Kraft mittels der Kopfschraube 26 dehnt sich der Scheibenblock nach außen gegen die Aufnahmebohrung des Werkzeuges aus, sodass eine kraftschlüssige Drehmomentübertragung über die Antriebswelle 2 erfolgt.

Die axiale Krafteinleitung in den Scheibenblock erfolgt einmalig bei der ersten Montage des Werkzeuges 9.

Zur Demontage des Werkzeuges 9 wird der Kolben 22 hydraulisch von der Stirnseite her mit Druck beaufschlagt. Die Krafteinleitung vom Kolben 22 über das Axiallager 33, den Bolzen 19, das Axiallager 32 und das Druckstück 15 bewirkt eine Entspannung des Scheibenblockes 11, sodass das Werkzeug 9 manuell entnommen werden kann, also nach links abgezogen werden kann. Anschließend wird ein neues Werkzeug 9 aufgeschoben. Über eine Steuerung der Hydraulikanlage wird die Lagerung drucklos geschaltet, sodass das Federpaket 21 sich wieder bis auf die Vorspannung entspannt. Das Werkzeug ist damit wieder gespannt.

Die Erfindung ist nicht auf das Ausführungsbeispiel beschränkt, sondern im Rahmen der Offenbarung vielfach variabel.

### Bezugszeichenliste:

- 1: Gehäuse
- 2: Antriebswelle
- 3: Lager
- 4: Lager
- 5: erstes Ende von 2
- 6: Mittel z. Ankopplung
- 7: Nutring
- 8: zweites Ende v. 2
- 9: Werkzeug
- 10: Lochung von 9
- 11: Scheibenblock
- 12: Gegenlager
- 13: Spannmittel
- 14: Kanal v. 2
- 15: Druckstück
- 16: erster Endbereich v. 15
- 17: zweiter Endbereich v. 15
- 18: Langloch in 2
- 19: Bolzen
- 20: Freiraum
- 21: Federpaket
- 22: Kolben
- 23: Druckmittelanschluss
- 24: Spannhülse
- 25: Spannkopf
- 26: Kopfschraube
- 27: Spannstück
- 28: Abstandsspalt
- 29: Stützfläche
- 30: Stützring
- 31: Aufnahmebuchse
- 32: Axiallager
- 33: Axiallager
- 34: Dichtungsmittel
- 35: Führungselement
- 36: Bolzen
- 37: Bolzen

## Patentansprüche

1. Maschinell betriebene Vorrichtung, insbesondere Fräsvorrichtung mit einer in einem Gehäuse (1) der Vorrichtung drehbar gelagerten Antriebswelle (2), deren erstes aus dem Gehäuse (1) abragendes Ende (5) Mittel (6) zur Ankopplung eines Drehantriebes aufweist und deren zweites aus dem Gehäuse (1) vorragendes Ende (8) ein scheibenartiges Werkzeug (9), insbesondere Fräswerkzeug, trägt, welches mit einer axialen Lochung (10) auf einen wellenseitig gehaltenen Scheibenblock (11) mit Ringspannelementen aufgesteckt ist, an einem wellenfesten Gegenlager (12) anliegt und dessen Scheibenblock (11) mittels eines Spannmittels (13) kraftschlüssig gegen die Lochlaibung der Lochung (10) des Werkzeuges anspannbar ist, **dadurch gekennzeichnet, dass** die Antriebswelle (2) einen zum zweiten Ende (8) offen ausmündenden, über einen Teil ihrer axialen Erstreckung verlaufenden Kanal (14) aufweist, in den ein Druckstück (15) axial verschiebbar eingesetzt ist, das an seinem zum zweiten Ende (8) der Antriebswelle (2) weisenden ersten Endbereich (16) mit dem Spannmittel (13) gekoppelt ist und an seinem zweiten Endbereich (17) mit einem die Antriebswelle (2) quer in einem axial gerichteten Langloch (18) derselben durchgreifenden Bolzen (19) gekoppelt ist, der radial über die Antriebswelle (2) in einen Freiraum (20) des Gehäuses (1) vorragt, wobei zwischen den vorragenden Bereichen des Bolzens (19) und einem nahe des zweiten Endes (8) der Antriebswelle (2) zwischen Antriebswelle (2) und Gehäuse (1) angeordneten Lager (4) ein Federpaket (21) mit axial wirkender Federkraft angeordnet oder eingespannt ist und zwischen den vorragenden Bereichen des Bolzens (19) und einem nahe des ersten Endes (5) der Antriebswelle (2) zwischen Antriebswelle (2) und Gehäuse (1) angeordneten Lager (3) ein axial verschieblicher Kolben (22) angeordnet ist, der mittels Druckbeaufschlagung über einen gehäuseseitigen Druckmittelanschluss (23) in Richtung zum zweiten Ende (8) der Antriebswelle (2) entgegen der Federkraft des Federpaketes (21) verstellbar ist.

2. Vorrichtung nach Anspruch 1, **dadurch gekennzeichnet, dass** das Spannmittel (13) aus einer Spannhülse (24) mit Spannkopf (25) und einer Kopfschraube (26) besteht, wobei die Spannhülse (24) in den Kanal (14) der Antriebswelle (2) eingreift und deren Spannkopf (25) sich mittelbar unter Zwischenanordnung eines Spannstückes (27) oder unmittelbar an der dem wellenfesten Gegenlager (12) abwandten Stirnfläche des Scheibenblockes (11) mit Ringspannelementen abstützt, wobei die Kopfschraube (26) sich mit ihrem Kopf am Spannkopf (25) abstützt und mit ihrem Gewindeschaft in das Druckstück (15) eingeschraubt ist, wobei zwischen Druckstück (15) und Spannhülse (24) ein Abstandsspalt (28) besteht und wobei die Bemessung des Spannkopfes (25), des Spannstückes (27) und des Kopfes der Kopfschraube (26) in Querrichtung zur axialen Erstreckung der Antriebswelle (2) so gewählt ist, dass das Werkzeug (9) mit seiner Lochung (10) über diese aufschiebbar ist.

3. Vorrichtung nach Anspruch 1 oder 2, **dadurch gekennzeichnet, dass** das Druckstück (15) an seinem zweiten Endbereich (17) ein Gewindestück aufweist, das in eine Gewindebohrung des Bolzens (19) eingeschraubt ist.

4. Vorrichtung nach den Ansprüchen 1 bis 3, **dadurch gekennzeichnet, dass** das Druckstück (15) an seinem zweiten Endbereich (17) eine ballige Stützfläche (29) aufweist, die an einer balligen Fläche des Bolzens (19) oder eines zwischen Bolzen (19) und Stützfläche (29) angeordneten Stützringes (30) anliegt.

5. Vorrichtung nach einem der Ansprüche 1 bis 4, **dadurch gekennzeichnet, dass** das Federpaket (21) aus mehreren Tellerfedern besteht.

6. Vorrichtung nach einem der Ansprüche 1 bis 5, **dadurch gekennzeichnet, dass** das Federpaket (21) in einer im Gehäuse (1) angeordneten Aufnahmebuchse (31) angeordnet ist.

7. Vorrichtung nach einem der Ansprüche 1 bis 6, **dadurch gekennzeichnet, dass** zwischen dem Federpaket (21) oder dessen Bestandteilen und den vorragenden Bereichen des Bolzens (19) ein Axiallager (32) angeordnet ist.

8. Vorrichtung nach einem der Ansprüche 1 bis 7, **dadurch gekennzeichnet, dass** zwischen den vorragenden Bereichen des Bolzens (19) und dem Kolben (22) ein Axiallager (33) angeordnet ist.

9. Vorrichtung nach einem der Ansprüche 1 bis 8, **dadurch gekennzeichnet, dass** der Kolben (22) abgedichtet im Gehäuse (1) angeordnet ist und gegebenenfalls auch gegenüber der Antriebswelle (2) abgedichtet, wobei die Stirnfläche des Kolbens (22), die dem ersten Ende (5) der Antriebswelle (2) benachbart ist, mit dem Druckmittelanschluss (23) in Verbindung ist.

10. Vorrichtung nach einem der Ansprüche 1 bis 9, **dadurch gekennzeichnet, dass** der Kolben (22) und/oder das Federpaket (21) oder eine Aufnahmebuchse (31) des Federpaketes (21) im Gehäuse (1) begrenzt axial beweglich und unverdrehbar um die Mittellängsachse der Antriebswelle (2) gehalten sind.

11. Vorrichtung nach einem der Ansprüche 2 bis 10, **dadurch gekennzeichnet, dass** die Gewindeverbindung zwischen Kopfschraube (26) und Druckstück (15) gegen Lösen gesichert ist.

12. Vorrichtung nach einem der Ansprüche 1 bis 11, **dadurch gekennzeichnet, dass** bei linksdrehender Antriebswelle (2) die Gewindeverbindungen zwischen Kopfschraube (26) und Druckstück (15) und Bolzen (19) mit Rechtsgewinde ausgebildet sind und bei rechtsdrehender Antriebswelle (2) analog mit Linksgewinde.

## Claims

1. A mechanically operated device, in particular milling device comprising a driving shaft (2) rotatably carried in a housing (1) of the device, the first end (5) of said driving shaft extending from the housing (1) comprising means (6) for coupling a rotary actuator and the second end (8) of said driving shaft extending from the housing (1) carrying a disc-type tool (9), in particular a milling tool, which is fitted with an axial hole (10) on a disc block (11) held on the shaft and provided with annular clamping members, engages a thrust-bearing (12) integrated in the shaft, and the disc block (11) thereof being clampable by means of a clamping means (13) in a force-fit manner against the inner surface of the hole (10) of the tool, **characterized by that** the driving shaft (2) includes a channel (14) being open toward the second end (8) and extending over part of its axial extension, in which is fitted a pressure piece (15) in an axially displaceable manner, said pressure piece being coupled at its first end region (16) showing toward the second end (8) of the driving shaft (2) to the clamping means (13) and at its second end region (17) to a bolt (19) transversely penetrating the driving shaft (2) in an axially oriented oblong hole (18) thereof, said bolt extending radially over the driving shaft (2) into a free space (20) of the housing (1), wherein between the protruding regions of the bolt (19) and a bearing (4) disposed close to the second end (8) of the driving shaft (2) between driving shaft (2) and housing (1), a spring assembly (21) with an axially acting spring force is disposed or gripped, and between the protruding regions of the bolt (19) and a bearing (3) disposed close to the first end (5) of the driving shaft (2) between driving shaft (2) and housing (1), an axially displaceable piston (22) is disposed that is adjustable, by means of application of pressure via a pressure medium connection (23) in the housing, in the direction toward the second end (8) of the driving shaft (2) against the spring force of the spring assembly (21).

2. The device according to claim 1, **characterized by that** the clamping means (13) includes a clamping sleeve (24) with a clamping head (25) and a head bolt (26), wherein the clamping sleeve (24) engages in the channel (14) of the driving shaft (2), and the clamping head (25) thereof is supported indirectly with the interposition of a clamping piece (27) or directly at the front face of the disc block (11) showing away from the thrust-bearing (12) integrated in the shaft with annular clamping members, wherein the head bolt (26) is supported with its head at the clamping head (25) and is threaded with its threaded part into the pressure piece (15), wherein between pressure piece (15) and clamping sleeve (24), a spacing gap (28) is formed, and wherein the dimensioning of the clamping head (25), of the clamping piece (27) and of the head of the head bolt (26) in the transverse direction to the axial extension of the driving shaft (2) is selected such that the tool (9) can be slid with its hole (10) thereonto.

3. The device according to claim 1 or 2, **characterized by that** the pressure piece (15) includes at its second end region (17) a threaded portion that is threaded into a threaded bore of the bolt (19).

4. The device according to claims 1 to 3, **characterized by that** the pressure piece (15) includes at its second end region (17) a crowned support surface (29) that engages a crowned surface of the bolt (19) or of a support ring (30) disposed between bolt (19) and support surface (29).

5. The device according to one of claims 1 to 4, **characterized by that** the spring assembly (21) includes a plurality of disc springs.

6. The device according to one of claims 1 to 5, **characterized by that** the spring assembly (21) is located in a receptacle (31) disposed in the housing (1).

7. The device according to one of claims 1 to 6, **characterized by that** between the spring assembly (21) or the components thereof and the protruding regions of the bolt (19), an axial bearing (32) is located.

8. The device according to one of claims 1 to 7, **characterized by that** between the protruding regions of the bolt (19) and the piston (22), an axial bearing (33) is located.

9. The device according to one of claims 1 to 8, **characterized by that** the piston (22) is sealingly included in the housing (1) and is, if applicable, also sealed from the driving shaft (2), wherein the front face of the piston (22) being adjacent to the first end (5) of the driving shaft (2) is connected to the pressure medium connection (23).

10. The device according to one of claims 1 to 9, **characterized by that** the piston (22) and/or the spring assembly (21) or a receptacle (31) of the spring assembly (21) are to a limited extent axially displaceable in the housing (1) and are non-rotatable about the central longitudinal axis of the driving shaft (2).

11. The device according to one of claims 2 to 10, **characterized by that** the threaded connection between head bolt (26) and pressure piece (15) is secured against detachment.

12. The device according to one of claims 1 to 11, **characterized by that** for a driving shaft (2) with left-handed thread, the thread connections between head bolt (26) and pressure piece (15) and bolt (19) are formed with a right-handed thread, and for a driving shaft (2) with right-handed thread in an analogous manner with a left-handed thread.

## Revendications

1. Dispositif mécanique, en particulier dispositif de fraisage comprenant un axe d'entraînement (2) monté rotatif dans un boîtier (1) du dispositif, la première extrémité (5) de cet axe d'entraînement s'étendant à partir du boîtier (1) et comprenant des moyens (6) d'accrochage d'un dispositif d'entraînement en rotation et la deuxième extrémité (8) de cet axe d'entraînement s'étendant à partir du boîtier (1) et supportant un outil (9) en forme de disque, en particulier un outil de fraisage, qui est emboîté avec un trou axial (10) sur un bloc de disque (11) maintenu à l'axe et pourvu d'éléments de serrage annulaires, vient en appui sur un contre-appui (12) intégré dans l'axe, et le bloc de disque (11) de celui-ci étant serrable à force par un moyen de serrage (13) contre la surface intérieure du trou (10) de l'outil, **caractérisé en ce que** l'axe d'entraînement (2) comporte un canal (14) étant ouvert vers la deuxième extrémité (8) et s'étendant sur une partie de son étendue axiale, dans lequel est insérée une pièce de pression (15) d'une façon axialement déplaçable, cette pièce de pression étant couplée à sa première zone d'extrémité (16) en vis-à-vis de la deuxième extrémité (8) de l'axe d'entraînement (2) au moyen de serrage (13) et à sa deuxième zone d'extrémité (17) à une tige (19) pénétrant transversalement l'axe d'entraînement (2) dans un trou oblong (18) de celui-ci étant orienté axialement, cette tige s'étendant radialement sur l'axe d'entraînement (2) dans un espace libre (20) du boîtier (1), dans lequel entre les zones de la tige (19) étant en saillie et un palier (4) situé près de la deuxième extrémité (8) de l'axe d'entraînement (2) entre l'axe d'entraînement (2) et le boîtier (1), un ensemble de ressorts (21) avec une force de ressort agissant axialement est situé ou enserré, et entre les zones de la tige (19) étant en saillie et un palier (3) situé près de la première extrémité (5) de l'axe d'entraînement (2) entre l'axe d'entraînement (2) et le boîtier (1), un piston (22) axialement déplaçable est situé qui est réglable, au moyen d'application d'une pression par l'intermédiaire d'une prise de fluide sous pression (23) dans le boîtier, dans la direction vers la deuxième extrémité (8) l'axe d'entraînement (2) contre la force de ressort de l'ensemble de ressorts (21).

2. Dispositif selon la revendication 1, **caractérisé en ce que** le moyen de serrage (13) comporte une douille de serrage (24) avec une tête de serrage (25) et une vis à tête (26), dans lequel la douille de serrage (24) s'engage dans le canal (14) de l'axe d'entraînement (2), et la tête de serrage (25) de celle-ci est en appui indirectement avec interposition d'une pièce de serrage (27) ou directement au front du bloc de disque (11) opposé au contre-appui (12) intégré dans l'axe avec des éléments de serrage annulaires, dans lequel la vis à tête (26) est en appui avec sa tête sur la tête de serrage (25) et est vissée avec sa partie filetée dans la pièce de pression (15), dans lequel entre la pièce de pression (15) et la douille de serrage (24), un espace d'écartement (28) est formé, et dans lequel le dimensionnement de la tête de serrage (25), de la pièce de serrage (27) et de la tête de la vis à tête (26) dans la direction transversale à l'étendue axiale de l'axe d'entraînement (2) est choisi de telle façon que l'outil (9) avec son trou (10) soit engageable sur celui-ci.

3. Dispositif selon la revendication 1 ou 2, **caractérisé en ce que** la pièce de pression (15) comporte à sa deuxième zone d'extrémité (17) une partie filetée qui est vissée dans un trou fileté de la tige (19).

4. Dispositif selon les revendications 1 à 3, **caractérisé en ce que** la pièce de pression (15) comporte à sa deuxième zone d'extrémité (17) une surface d'appui (29) couronnée qui s'engage à une surface couronnée de la tige (19) ou d'un anneau d'appui (30) situé entre la tige (19) et la surface d'appui (29).

5. Dispositif selon une des revendications 1 à 4, **caractérisé en ce que** l'ensemble de ressorts (21) comporte une pluralité de rondelles Belleville.

6. Dispositif selon une des revendications 1 à 5, **caractérisé en ce que** l'ensemble de ressorts (21) est situé dans un fût de réception (31) dans le boîtier (1).

7. Dispositif selon une des revendications 1 à 6, **caractérisé en ce qu'**entre l'ensemble de ressorts (21) ou les composants de celui-ci et les zones de la tige (19) étant en saillie, un palier (32) axial est situé.

8. Dispositif selon une des revendications 1 à 7, **caractérisé en ce qu'**entre les zones de la tige (19) étant en saillie et le piston (22), un palier axial (33) est situé.

9. Dispositif selon une des revendications 1 à 8, **caractérisé en ce que** le piston (22) est prévu de façon étanche dans le boîtier (1) et est, le cas échéant, aussi étanché par rapport à l'axe d'entraînement (2), dans lequel le front du piston (22) étant voisin à la première extrémité (5) de l'axe d'entraînement (2) est lié à la prise de fluide sous pression (23).

10. Dispositif selon une des revendications 1 à 9, **caractérisé en ce que** le piston (22) et/ou l'ensemble de ressorts (21) ou un fût de réception (31) de l'ensemble de ressorts (21) sont dans une mesure limitée axialement déplaçables dans le boîtier (1) et sont solidaires en rotation autour de l'axe longitudinale centrale de l'axe d'entraînement (2).

11. Dispositif selon une des revendications 2 à 10, **caractérisé en ce que** la liaison filetée entre la vis à tête (26) et la pièce de pression (15) est protégée contre desserrage.

12. Dispositif selon une des revendications 1 à 11, **caractérisé en ce que** pour un axe d'entraînement (2) avec un filetage à gauche, les liaisons filetées entre la vis à tête (26) et la pièce de pression (15) et la tige (19) sont réalisées avec un filetage à droite, et pour un axe d'entraînement (2) avec un filetage à droite de façon analogue avec un filetage à gauche.
